# EUROPÄISCHE PATENTSCHRIFT

(11) **EP 1 182 003 B1**
(45) Veröffentlichungstag und Bekanntmachung des Hinweises auf die Patenterteilung: **28.05.2008**
(21) Anmeldenummer: 01118216.9
(22) Anmeldetag: 28.07.2001
(51) Int. Cl.: B23Q 1/01, B23Q 15/14, B23Q 15/22, B23Q 17/22, B23Q 3/18, B23Q 39/02, B23Q 39/04, B23Q 11/04, B23Q 17/00, B23Q 5/58

(54) **Werkzeugmaschine und Verfahren zum Betreiben einer Werkzeugmaschine**
Machine tool and method of operating a machine tool
Machine-outil et procédé d'opération d'une machine-outil

(30) Priorität: 16.08.2000 DE 10040019
(43) Veröffentlichungstag der Anmeldung: 27.02.2002
(73) Patentinhaber: Index-Werke GmbH & Co. KG Hahn & Tessky, 73730 Esslingen (DE)
(72) Erfinder: Link, Helmut Friedrich, 73773 Aichwald (DE); Grossmann, Walter, 73666 Baltmannsweiler (DE); Heckeler, Heinz, 73230 Kirchheim/Teck (DE); Beck, Eberhard Robert, 73773 Aichwald (DE)
(74) Vertreter: Hoeger, Stellrecht & Partner Patentanwälte

(56) Entgegenhaltungen:
- EP-A- 0 285 823
- EP-A- 0 343 315
- US-A- 4 884 461

## Beschreibung

Die Erfindung betrifft eine Maschine, insbesondere eine Werkzeugmaschine umfassend ein Maschinengestell und mindestens eine in mindestens einer Ausrichtrichtung definiert zum Maschinengestell positionierte Funktionseinheit, welche über eine Verbindungsstelle lösbar und zum Verhindern einer Bewegung in mindestens einer Ausweichrichtung kraftschlüssig mit dem Maschinengestell verbunden ist, (siehe z.B. EP-A-0 343 315).

Bei derartigen Werkzeugmaschinen ist bewußt die Funktionseinheit lösbar und kraftschlüssig mit dem Maschinengestell verbunden, um beispielsweise im Fall von Kollisionen oder anderen unerwarteten Ereignissen die Möglichkeit zu eröffnen, daß die Funktionseinheit durch eine Relativbewegung zum Maschinengestell nicht oder nicht erheblich beschädigt wird.

Andererseits hat eine derartige Ausbildung der Werkzeugmaschine den Nachteil, daß sich die definierte Position der Ausrichtrichtung der Funktionseinheit relativ zum Maschinengestell verändern kann und somit die Werkzeugmaschine nicht mehr in der Lage ist, mit der geforderten Präzision Werkstücke zu bearbeiten.

Der Erfindung liegt daher die Aufgabe zugrunde, eine Maschine der gattungsgemäßen Art dahingehend zu verbessern, daß bei nicht mehr definiert zum Maschinengestell verlaufender Ausrichtrichtung der Funktionseinheit dies möglichst einfach erkennbar und möglichst einfach behebbar ist.

Diese Aufgabe wird bei einer Maschine der eingangs beschriebenen Art erfindungsgemäß dadurch gelöst, daß im Bereich der Verbindungsstelle an mindestens zwei in Richtung der Ausrichtrichtung im Abstand voneinander angeordneten Meßorten mittels eines Wegmeßsensors in der Ausweichrichtung eine Relativposition zwischen der Funktionseinheit und dem Maschinengestell erfaßbar ist und daß dem Wegmeßsensor eine Auswerteeinrichtung und eine Visualisierungseinrichtung zugeordnet sind, mit welchen aktuelle, von dem Wegmeßsensor erfaßte Relativpositionen visualisierbar sind.

Der Vorteil der erfindungsgemäßen Lösung ist darin zu sehen, daß durch das Vorsehen des Wegmeßsensors im Bereich der Verbindungsstelle zwischen der Funktionseinheit und dem Maschinengestell die Möglichkeit geschaffen wurde, unabhängig von dem Betriebszustand der Funktionseinheit deren Ausrichtung relativ zum Maschinengestell zu erkennen und damit die Funktionseinheit gegebenenfalls wieder exakt relativ zum Maschinengestell zu positionieren.

Insbesondere eröffnet die erfindungsgemäße Lösung auch die Möglichkeit, bei im Betrieb befindlicher Maschine die aktuelle Relativposition zu erfassen.

Unter einer Maschine im Sinne der vorliegenden Erfindung ist neben einer Werkzeugmaschine auch ein Roboter oder eine Handhabungseinrichtung zu verstehen.

Eine besonders vorteilhafte Lösung sieht vor, daß die aktuelle Relativposition während eines Produktionszyklus, vorzugsweise sogar während einer Werkstückbearbeitung, erfaßbar ist.

Prinzipiell wäre es im Rahmen der erfindungsgemäßen Lösung denkbar, einen mobilen Wegmeßsensor vorzusehen, der jeweils an dem entsprechenden Meßort einsetzbar ist.

Insbesondere zum Erfassen der Relativposition während eines Produktionszyklus oder eines Bearbeitungszyklus hat es sich als besonders günstig erwiesen, wenn jedem Meßort ein stationärer Wegmeßsensor zugeordnet ist, so daß mit diesem Wegmeßsensor im Extremfall sogar ständige Messungen an der Maschine möglich sind, ohne hierzu deren Produktivität zu beeinträchtigen.

Prinzipiell wäre es denkbar, mit dem Wegmeßsensor die Relativposition eines Funktionsteils der Funktionseinheit zu erfassen. Dies hätte jedoch negative Auswirkungen auf alle die Fälle, in denen während eines Produktionszyklus oder gar während einer Werkstückbearbeitung die Erfassung der Relativposition erfolgen soll.

Aus diesem Grund hat es sich als besonders vorteilhaft erwiesen, wenn der Wegmeßsensor die Relativposition eines Gehäuses der Funktionseinheit detektiert, da die Detektion am Gehäuse der Funktionseinheit jederzeit möglich ist, ohne daß eine Beeinträchtigung einer Werkstückbearbeitung oder anderer Produktionsschritte erfolgt.

Als besonders zweckmäßig hat es sich dabei erwiesen, wenn der Wegmeßsensor zum Erfassen der Relativposition an einem Montageabschnitt des Gehäuses der Funktionseinheit angreift.

Hinsichtlich der Anordnung des Wegmeßsensors sind nach wie vor unterschiedliche Möglichkeiten denkbar. So wäre es beispielsweise denkbar, den Wegmeßsensor auf seiten der Funktionseinheit vorzusehen.

Aus Gründen einer einfachen Erfassung der vom Wegmeßsensor detektierten Werte hat es sich als besonders günstig erwiesen, wenn der Wegmeßsensor maschinengestellseitig angeordnet ist und die Relativposition der Funktionseinheit bezüglich des Maschinengestells abtastet. Damit kann der Wegmeßsensor stets maschinengestellseitig angeordnet sein, und es ist beispielsweise in einfacher Art und Weise möglich, die Visualisierungseinrichtung ebenfalls maschinengestellseitig vorzusehen.

Da bei der erfindungsgemäßen Lösung keine absoluten Positionen gemessen werden, sondern nur Relativpositionen, hat es sich als besonders zweckmäßig erwiesen, wenn der Auswerteeinrichtung ein Speicher zugeordnet ist, mit welchen Relativpositionen als Referenzpositionen speicherbar sind.

Derartige Referenzpositionen sind in unterschiedlichster Art und Weise erfaßbar. So wäre es beispielsweise denkbar, als Referenzposition stets die jeweils der aktuellen Relativposition vorausgehende Relativposition einzusetzen.

Um jedoch einen definierten Bezugswert zu erhalten, ist vorzugsweise vorgesehen, daß als Referenzposition die Relativposition bei genauigkeitsoptimierter Ausrichtung der Funktionseinheit relativ zum Maschinengestell verwendet wird.

Vorzugsweise ist als Referenzposition jeweils die Relativposition bei Inbetriebnahme der Werkzeugmaschine erfaßbar.

Besonders vorteilhaft ist es jedoch, wenn die Referenzposition einmalig bei optimal ausgerichteter Funktionseinheit erfaßbar und für die spätere Auswertung der Relativpositionen speicherbar ist.

Hinsichtlich der Art der Anzeige der Relativposition durch die Visualisierungseinrichtung sind die unterschiedlichsten Möglichkeiten denkbar. Beispielsweise wäre es denkbar, die Visualisierungseinrichtung so auszubilden, daß sie einen Zahlenwert für die jeweilige Referenzposition und einen Zahlenwert für die jeweilige Relativposition anzeigt.

Um jedoch schlüssige Aussagen machen zu können, ist es besonders günstig, wenn die Visualisierungseinrichtung die Differenz zwischen der Relativposition und der Referenzposition anzeigt.

Eine derartige Anzeige kann entweder numerisch, beispielsweise durch Angabe von Zahlen, oder auch grafisch, beispielsweise durch Balkendiagramme erfolgen.

Eine besonders vorteilhafte Weiterentwicklung einer erfindungsgemäßen Maschine sieht einen mobilen Wegmeßsensor vor, mit welchem nicht nur im Bereich der Verbindungsstelle Messungen zur exakten Ausrichtung mehrerer Funktionseinheiten vornehmbar sind, sondern auch die Erfassung der Relativpositionen beispielsweise zweier Funktionseinheiten relativ zueinander oder relativ zum Maschinengestell.

Eine besonders zweckmäßige Lösung, bei welcher der mobile Wegmeßsensor vorteilhaft zum Einsatz kommen kann, sieht vor, daß mit dem mobilen Wegmeßsensor eine Relativposition zwischen dem Maschinengestell oder einer auf diesem sitzenden Funktionseinheit einerseits und einer durch eine Maschinensteuerung der Werkzeugmaschine steuerbaren Funktionseinheit andererseits durchführbar ist.

Diese Lösung hat den großen Vorteil, daß sie es erlaubt, aufgrund der Maschinensteuerung die bewegbare Funktionseinheit in bezüglich des Maschinengestells durch die Maschinensteuerung exakt festlegbaren Stellungen zu positionieren und gleichzeitig den Wegmeßsensor und diese Funktionseinheit in Wirkverbindung zu bringen, so daß mittels des Wegmeßsensors überhaupt eine Messung der Relativposition möglich ist.

Darüber hinaus wird die erfindungsgemäße Aufgabe aber auch noch durch ein Verfahren zum Erfassen der exakten Position einer Funktionseinheit einer Werkzeugmaschine relativ zu deren Maschinengestell gelöst, wobei die Funktionseinheit in mindestens einer Ausrichtrichtung definiert zum Maschinengestell positioniert ist und über eine Verbindungsstelle lösbar und zum Verhindern einer Bewegung in mindestens einer Ausweichrichtung kraftschlüssig mit dem Maschinengestell verbunden ist und ferner erfindungsgemäß im Bereich der Verbindungsstelle an mindestens zwei in der Ausrichtrichtung im Abstand voneinander angeordneten Meßorten mittels eines Wegmeßsensors in der Ausweichrichtung eine aktuelle Relativposition zwischen der Funktionseinheit und dem Maschinengestell erfaßt und anschließend visualisiert wird.

Diese Lösung hat ebenfalls den Vorteil, daß in allen möglichen Betriebszuständen der Maschine die Erfassung der Relativposition erfolgen kann.

Dies wäre beispielsweise auch dann möglich, wenn die Maschine ausgeschaltet ist. Besonders vorteilhaft ist es jedoch, wenn die Relativposition bei im Betrieb befindlicher Maschine erfaßt wird.

Um die Produktivität der Maschine nicht zu stören, ist es besonders vorteilhaft, wenn die Relativposition während eines Produktionsdurchlaufs erfaßt wird, wobei der Produktionsdurchlauf nicht unterbrochen werden muß, sondern parallel zum Produktionsdurchlauf eine derartige Erfassung der Relativposition zwischen Maschinengestell und Funktionseinheit möglich ist.

Dabei kann vorgesehen sein, daß die Relativposition im Verlauf einer Werkstückbearbeitung erfaßt wird, so daß keinerlei Beeinträchtigung der Produktivität der Maschine erfolgt.

Bislang wurde nicht erläutert, wie die Daten der jeweiligen Relativposition vorteilhaft einsetzbar sind. So ist es besonders günstig, wenn bei exakt positionierter Funktionseinheit an den Meßorten eine relative Referenzposition erfaßt wird und diese dann mit der jeweils aktuellen Relativposition verglichen wird, so daß über den Vergleich unmittelbar die Abweichungen von der Referenzposition und somit von dem optimal justierten Zustand der Funktionseinheit erkennbar sind.

Bezüglich der Art der Ermittlung der aktuellen Relativposition wurden bislang noch keine näheren Angaben gemacht. So wäre es beispielsweise denkbar, die aktuelle Relativposition ständig zu erfassen. Um jedoch die erforderliche Information bei der Maschine lediglich dann zur Verfügung zu stellen, wenn diese Information auch benötigt wird, ist vorzugsweise eine diskontinuierliche Ermittlung der aktuellen Relativposition vorgesehen.

So ist es beispielsweise denkbar, die aktuelle Relativposition nach festgelegten Zeitintervallen zu ermitteln.

Eine andere Alternative ist die, die aktuelle Relativposition nach festgelegten Bearbeitungszyklen zu ermitteln, so daß beispielsweise am Ende des jeweiligen Bearbeitungszyklus oder am Anfang des nächstfolgenden Bearbeitungszyklus die aktuelle Relativposition ermittelt und somit die Maschine im Hinblick auf ihre Genauigkeit überprüft wird.

Eine weitere Möglichkeit, die Ermittlung der aktuellen Relativposition möglichst selten durchzuführen, ist die, daß die aktuelle Relativposition nach einem Kollisionsfall ermittelt wird, da in der Regel nur bei einem Kollisionsfall davon auszugehen ist, daß sich die bislang bestehende Relativposition verändert hat, da es für die Präzision einer Maschine wesentlich ist, daß diese so steif ausgebildet ist, daß beispielsweise die Bearbeitung eines Werkstücks und insbesondere die Bearbeitung des maximal möglichen Werkstücks keine negativen Folgen auf die Genauigkeit der Maschine hat.

Eine besonders vorteilhafte Lösung sieht dabei vor, daß die Differenz zwischen der Referenzposition und der aktuellen Relativposition ermittelt und angezeigt wird, so daß sich der Betreiber der Maschine nicht mit den einzelnen Zahlenwerten auseinandersetzen muß, sondern unmittelbar angezeigt bekommt, welche Genauigkeitsdifferenz zum jeweiligen Zeitpunkt die Fertigung beeinträchtigen könnte.

Eine weitere vorteilhafte Möglichkeit, das erfindungsgemäße Konzept einzusetzen, ist darin zu sehen, daß die aktuelle Relativposition im Verlauf einer Justierung der Funktionseinheit ermittelt wird und die Justierung entsprechend dem Vergleich mit der Referenzposition durchgeführt wird, so daß das erfindungsgemäße Verfahren insbesondere dann vorteilhaft einsetzbar ist, wenn möglichst schnell eine relativ zum Maschinengestell dejustierte Funktionseinheit wieder justiert werden soll.

Weitere Merkmale und Vorteile sind Gegenstand der nachfolgenden Beschreibung sowie der zeichnerischen Darstellung eines Ausführungsbeispiels. In der Zeichnung zeigen:
- Fig. 1: eine schematische Draufsicht auf ein Ausführungsbeispiel einer erfindungsgemäßen Werkzeugmaschine;
- Fig. 2: eine schematische perspektivische Ansicht des ersten Ausführungsbeispiels der erfindungsgemäßen Lösung, wobei die Werkzeugschlitten und -träger nicht dargestellt sind und
- Fig. 3: eine Schaltskizze des Ausführungsbeispiels.

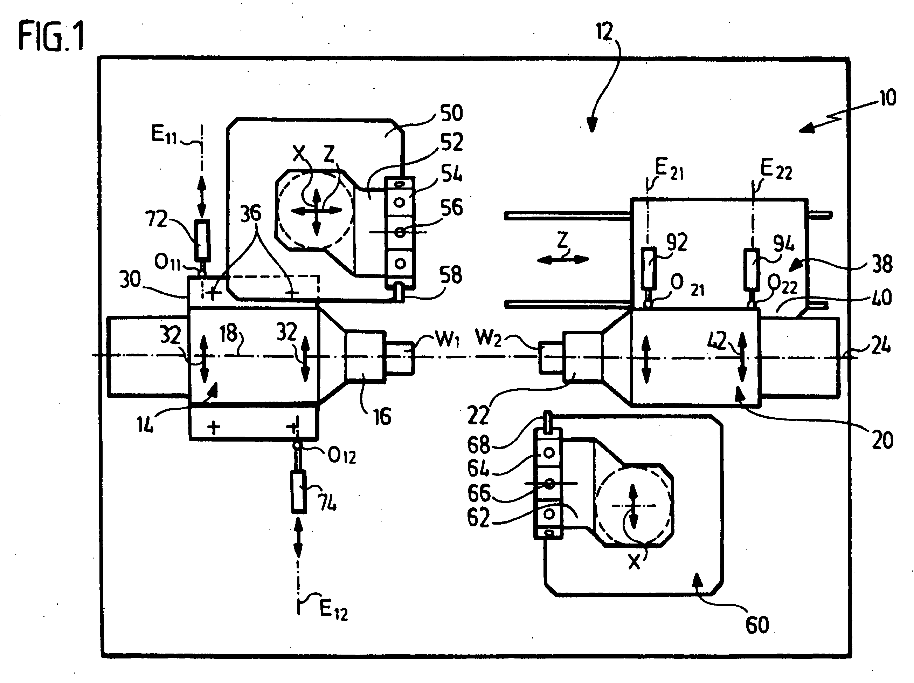

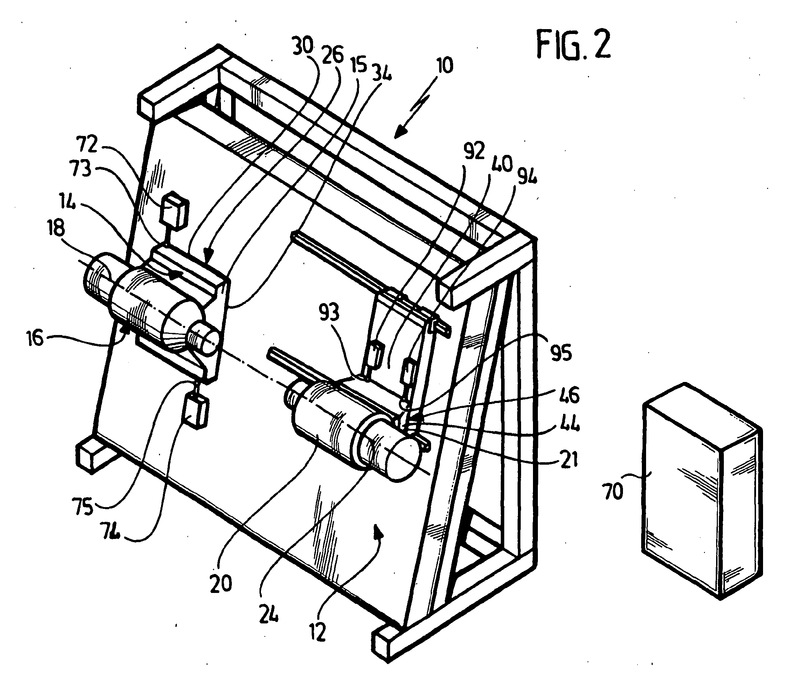

Ein Ausführungsbeispiel einer erfindungsgemäßen Maschine, beispielsweise eine Werkzeugmaschine, dargestellt in Fig. 1 und 2, umfaßt ein als Ganzes mit 10 bezeichnetes Maschinengestell mit einem Trägerkörper 12, auf welchem ein erstes Spindelgehäuse 14 einer ersten um eine Spindelachse 18 drehbaren Arbeitsspindel 16 angeordnet ist.

Ferner ist auf dem Trägerkörper 12 ein zweites Spindelgehäuse 20 einer zweiten Arbeitsspindel 22 angeordnet, welche um eine Spindelachse 24 drehbar ist, wobei die Spindelachsen 18 und 24 fluchtend zueinander angeordnet sind.

Beispielsweise sitzt dabei an einer ersten Verbindungsstelle 26 das erste Spindelgehäuse 14 mit einem Fuß 15 auf einer unmittelbar am Trägerkörper 12 ausgebildeten Montagefläche 30 mit seiner Auflagefläche 34 auf und ist auf dieser gegen eine Bewegung in einer quer zur Spindelachse 18 sowie parallel zur Montagefläche 30 verlaufenden Ausweichrichtung 32 kraftschlüssig fixiert, wobei zur Erzeugung einer kraftschlüssigen Verbindung die Auflagefläche 34 gegen die Montagefläche 30 mittels Spannelementen 36 gespannt ist, so daß das Spindelgehäuse 14 mit der Auflagefläche 34 relativ zur Montagefläche 30 beispielsweise im Fall einer Maschinenkollision in Richtung der Ausweichrichtung 32 unter Überwindung der kraftschlüssigen Verbindung zwischen der Montagefläche 30 und der Auflagefläche 34 verschiebbar ist.

Das zweite Spindelgehäuse 20 ist seinerseits auf einem Schlitten 38 angeordnet, welcher in einer Z-Richtung relativ zum Trägerkörper 12 gesteuert bewegbar ist.

Der Schlitten 38 trägt seinerseits eine Montagefläche 40, auf welcher das Spindelgehäuse 20 an einer zweiten Verbindungsstelle 46 durch seinen Fuß 21 mit einer Auflagefläche 44 aufliegt und dabei gegen eine Bewegung in einer quer zur Spindelachse 24 und parallel zur Montagefläche 40 verlaufenden Ausweichrichtung 42 kraftschlüssig fixiert ist, wobei im Falle einer Maschinenkollision die Kraftwirkung auf die Spindel 22 und somit auf das Spindelgehäuse 20 zu einer Überwindung der kraftschlüssigen Fixierung der Auflagefläche 44 auf der Montagefläche 40 führt und somit das gesamte Spindelgehäuse 20 relativ zum Schlitten 38 in der Ausweichrichtung 42 verschiebbar ist, wobei die Ausweichrichtung 42 prinzipiell beliebig ausgerichtet sein.

Ferner ist auf dem Trägerkörper 12 ein erster Werkzeugschlitten 50 angeordnet, welcher in einer X-Richtung senkrecht zur Spindelachse 18 und in einer Z-Richtung parallel zur Spindelachse 18 relativ zum Trägerkörper 12 in bekannter Weise bewegbar ist.

Auf dem ersten Werkzeugschlitten 50 ist dabei ein erster Werkzeugträger 52 angeordnet, welcher beispielsweise einen Revolverkopf 54 aufweist, in dessen Werkzeugaufnahmen 56 Werkzeuge 58 einsetzbar sind, um beispielsweise ein in der ersten Spindel 16 aufgenommenes und rotierend um die Spindelachse 18' bewegtes Werkstück W₁ bearbeiten zu können.

Ferner ist dem zweiten Spindelgehäuse 20 ein zweiter Werkzeugschlitten 60 zugeordnet, welcher zumindest in X-Richtung senkrecht zur Spindelachse 24 bewegbar ist und seinerseits einen zweiten Werkzeugträger 62 trägt, der mit einem Revolverkopf 64 versehen ist, in dessen Werkzeugaufnahmen 66 Werkzeuge 68 zur Bearbeitung eines in der zweiten Spindel 22 aufgenommenen Werkstücks W₂ angeordnet ist.

Ferner ist vorzugsweise das gesamte Spindelgehäuse 20 mitsamt dem Schlitten 38 in der Z-Richtung bewegbar, um beispielsweise das Werkstück W₁ auf seiner bearbeiteten Seite aus der ersten Spindel 16 zu entnehmen, um dann bei diesem als W₂ bezeichneten Werkstück eine Rückseite zu bearbeiten.

Zur Steuerung der Bewegungen der Werkzeugschlitten 50 und 60 sowie der Werkzeugträger 52 und 62 sowie des Schlittens 38 und der Spindeln 16 und 20 ist eine als Ganzes mit 70 bezeichnete programmierbare Maschinensteuerung 70 vorgesehen.

Erfolgt nun beispielsweise aufgrund eines Steuerungs- oder Programmierfehlers eine Kollision zwischen dem Werkzeug 58 des ersten Werkzeugträgers 52 mit der ersten Spindel 16, so ist die kraftschlüssige Verbindung zwischen der Montagefläche 30 und der Auflagefläche 34 so ausgebildet, daß diese im Kollisionsfall nachgiebig ist und somit das gesamte erste Spindelgehäuse 14 unter Energieverbrauch verschoben werden kann.

Eine derartige Verschiebung ist auch durch andere Arten von Kollisionen möglich.

Damit ist jedoch die erste Spindelachse 18 relativ zum Maschinengestell 10 verschoben und auch nicht mehr fluchtend zur zweiten Spindelachse 24 angeordnet, so daß die weitere Bearbeitung der Werkstücke W₁ und/oder W₂ zu einer Genauigkeitseinbuße führt, da die Steuerung 70 den Werkzeugschlitten 50 und den Werkzeugträger 52 noch in gleicher Weise steuert, wie wenn die Spindelachse 18 in ihrer ursprünglichen Position wäre.

Um die Relativverschiebung des ersten Spindelgehäuses 14 relativ zum Maschinengestell 10, welches nach einer Kollision entsprechend der vonstehend beschriebenen Art und Weise um Strecken in der Größenordnung von einigen Mikrometern in der Ausweichrichtung 32 verschoben ist, exakt feststellen zu können, sind beispielsweise dem ersten Spindelgehäuse 14 zwei Wegmeßaufnehmer 72 und 74 zugeordnet, welche stationär an dem Trägerkörper 12 montiert sind und mit ihren Tastköpfen 73 bzw. 75 in der Lage sind, an Meßorten O₁₁ und O₁₂, die beispielsweise in senkrecht zur Spindelachse 18, jedoch in parallel zu dieser verlaufenden Ebenen E₁₁ und E₁₂ liegen, eine Position des Fußes 15 des ersten Spindelgehäuses 14 relativ zum Trägerkörper 12 zu erfassen.

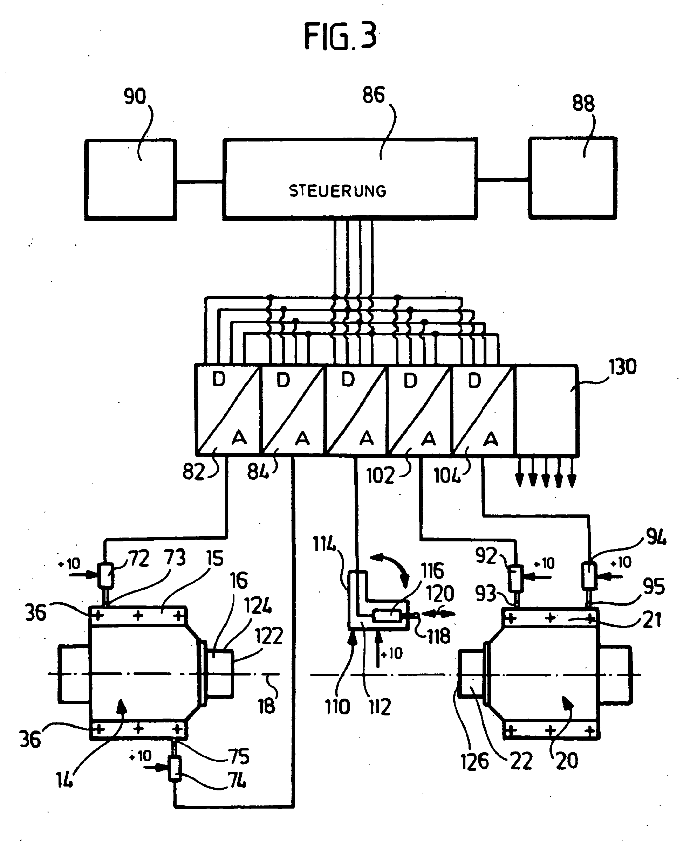

Hierzu ist, wie beispielsweise in Fig. 3 dargestellt, jeder der Wegmeßaufnehmer 72 und 74 mit einem A/D-Wandler 82 bzw. 84 verbunden, der seinerseits mit einer als Ganzes mit 86 bezeichneten Steuerung korrespondiert, welche in der Lage ist, die von den Wegmeßaufnehmern 72 und 74 gemessenen Positionen bei ideal justierter Werkzeugmaschine zu erfassen und in einem Speicher 88 abzulegen.

Dabei kann die Steuerung 86 in die Maschinensteuerung 76 integriert sein, sie kann aber auch von dieser völlig getrennt arbeiten.

Damit ist die relative Lage des ersten Spindelkastens 14 bezüglich des Maschinengestells 10 erfaßt und in dem Speicher dokumentiert.

Während des Betriebs der Werkzeugmaschine besteht nun die Möglichkeit, entweder laufend oder nach konstanten Zeitabständen, oder nach Bearbeitung einer bestimmten Zahl von Werkstücken W, die Wegmeßaufnehmer 72 und 74 zu aktivieren und die aktuelle Relativposition des ersten Spindelgehäuses 14 in Relation zum Maschinengestell 10 zu erfassen.

Erfolgt keine Kollision, so können Änderungen der Relativposition des ersten Spindelgehäuses 14 relativ zum Maschinengestell 10 auch durch thermische Ausdehnungen oder andersartige Einwirkungen auftreten.

Damit läßt sich die relative Lage des ersten Spindelgehäuses 14 bezüglich des Maschinengestells 10 beispielsweise auch während eines Bearbeitungsprozesses eines Werkstücks W₁ oder W₂ ständig verfolgen.

Ist jedoch beispielsweise eine Kollision der ersten Arbeitsspindel 16 mit dem ersten Werkzeugträger 52 erfolgt, so läßt sich das Ausmaß der Verschiebung des ersten Spindelgehäuses 14 relativ zum Maschinengestell 10 in der Ausweichrichtung 32 durch die Wegmeßaufnehmer 72 und 74 exakt erfassen, und somit besteht die Möglichkeit zu beurteilen, ob eine Nachjustierung oder Neueinstellung der Werkzeugmaschine erforderlich ist.

Um die Auswirkungen einer Kollision und der erfolgten Dejustierung des ersten Spindelgehäuses 14 relativ zum Maschinengestell 10 dokumentieren und für einen Benutzer der Werkzeugmaschine nachvollziehbar darstellen zu können, ist der Steuerung 86 eine Visualisierungseinrichtung 90, beispielsweise ein Bildschirm, zugeordnet, welcher in der Lage ist, beispielsweise den ursprünglichen von den Wegmeßaufnehmern 72 und 74 als Referenzposition gemessenen Meßwert und gleichzeitig den der aktuellen Referenzposition entsprechenden Meßwert:anzuzeigen.

Bereits anhand dieser Meßwerte ist der Fachmann in der Lage, das Ausmaß der Dejustierung des ersten Spindelgehäuses 14 durch eine Kollision zu beurteilen und daraufhin Reparaturmaßnahmen festzulegen.

Ist beispielsweise nur eine Verschiebung des ersten Spindelgehäuses 14 relativ zum Maschinengestell 10 erfolgt, so besteht die Möglichkeit, unter Beibehaltung und ständiger Fortsetzung der Messung mit den Wegmeßaufnehmern 72 und 74 und Lösen der für die kraftschlüssige Verbindung zwischen der Montagefläche 30 und der Auflagefläche 34 verantwortlichen Spannelemente 36 das erste Spindelgehäuse 14 relativ zum Maschinengestell so wieder zu justieren, daß die Wegmeßaufnehmer 72 und 74 die Werte anzeigen, die möglichst weitgehend den ursprünglich von den Wegmeßaufnehmern 72 und 74 erfaßten Werten entsprechen, welche von der Steuerung 86 in dem Speicher 88 abgelegt wurden.

Dazu ist es beispielsweise ausreichend, mit der Visualisierungseinrichtung 90 nur die Differenz zwischen dem ursprünglichen, dem justierten Zustand entsprechenden Meßwert und dem aktuellen, d. h. dem nach der Kollision verschobenen Zustand entsprechenden Meßwert, anzuzeigen, um für den Betreiber den Grad der Dejustierung des ersten Spindelkastens 14 relativ zum Maschinengestell 10 eindeutig erkennbar zu gestalten.

Ferner sind dem zweiten Spindelgehäuse 20 ebenfalls zwei Wegmeßaufnehmer 92 und 94 zugeordnet, welche stationär auf dem Schlitten 38 montiert sind und mit ihren Tastköpfen 93 und 95 an Meßorten O₂₁ und O₂₂, die in senkrecht zur Spindelachse 24 verlaufenden Ebenen E₂₁ und E₂₂ liegen, an dem Fuß 21 des zweiten Spindelgehäuses 20 anliegen und dadurch die Lage des zweiten Spindelgehäuses 20 relativ zum Schlitten 38 in der Ausweichrichtung 42 erfassen

Da der Schlitten 38 lediglich in Z-Richtung relativ zum Trägerkörper 12 des Maschinengestells 10 bewegbar ist, stellt die Erfassung der Relativposition des zweiten Spindelgehäuses 20 bezogen auf die Ausweichrichtung 42 ebenfalls eine exakte Erfassung der Relativposition dieses zweiten Spindelgehäuses 20 relativ zum Trägerkörper 12 und somit zum Maschinengestell 10 dar.

Auch die Wegmeßaufnehmer 92 und 94 sind mit Analog-Digital-Wandlern 102 und 104 verbunden, die ihrerseits wiederum mit der Steuerung 86 in Wechselwirkung stehen, so daß die Steuerung 86 in gleicher Weise wie im Zusammenhang mit den Wegmeßaufnehmern 72 und 74 beschrieben, in der Lage ist, die exakte Relativposition des Spindelgehäuses 20 in Ausweichrichtung 42 dann zu erfassen, wenn das Spindelgehäuse 20 exakt relativ zum Maschinengestell 10 und auch exakt relativ zum Spindelgehäuse 14 ausgerichtet ist und außerdem in der Lage ist, die Relativposition des Spindelgehäuses 20 jeweils aktuell während des Betriebs der Werkzeugmaschine und insbesondere nach einer Kollision und auch beim Wiederausrichten des Spindelgehäuses 20 in der beschriebenen Art und Weise zu erfassen.

Bei einer besonders bevorzugten Ausführungsform ist außerdem noch eine als Ganzes mit 110 bezeichnete mobile Meßeinrichtung vorgesehen, welche einen Anlagekörper 112 mit einer Anlagekante 114 aufweist und außerdem einen Wegmeßaufnehmer 116 trägt, welcher in der Lage ist, mit einem Tastkopf 118 Positionen in einer Meßrichtung 120 zu erfassen, die quer, vorzugsweise senkrecht zur Anlagekante 114 verläuft.

Die mobile Meßeinrichtung 110 ist so einsetzbar, daß die Anlagekante 114 an eine beliebige Referenzfläche, beispielsweise eine Stirnfläche 122 der ersten Arbeitsspindel 16 oder eine Mantelfläche 124 der ersten Arbeitsspindel 16, anlegbar ist, wobei der Tastkopf 118 in Meßrichtung 120 weist und dabei in der Lage ist, beispielsweise eine Position einer durch die Maschinensteuerung 70 auf den Tastkopf 118 zu bewegten Funktionsgruppe zu erkennen.

Wird beispielsweise der Anlagekörper 112 mit der Anlagekante 114 an die Stirnseite 122 der ersten Arbeitsspindel 16 angelegt, so weist die Meßrichtung 120 in Richtung der zweiten Arbeitsspindel 22 und diese ist gesteuert durch die Maschinensteuerung 70 mittels des Schlittens 38 so lange in Z-Richtung auf die erste Arbeitsspindel 14 zu bewegbar, bis eine Stirnfläche 126 der zweiten Arbeitsspindel 22 den Tastkopf 118 berührt und diesen in Meßrichtung 120 in Richtung der Anlagekante 114 bis zu einer Relativposition bewegt, die entsprechend den Vorgaben der Maschinensteuerung 70 eine bestimmte Relativposition in Z-Richtung hat.

Wurde in dieser definierten Relativposition der Stirnfläche 126 der zweiten Arbeitsspindel 22 in Z-Richtung der Abstand zwischen dieser Stirnfläche 126 und der Stirnfläche 122 der ersten Arbeitsspindel 16 bereits bei exakt justierter Werkzeugmaschine schon vorher mit der mobilen Meßeinrichtung 110 erfaßt, so besteht die Möglichkeit, nunmehr mit der mobilen Meßeinrichtung 110 zu überprüfen, ob der bereits vorausgehend erfaßte Abstand zwischen den Stirnflächen 122 und 126 nach wie vor besteht oder ob beispielsweise eine Kollision auch diesen Abstand in Z-Richtung verändert hat.

Damit läßt sich auch diese Relativposition des ersten Spindelgehäuses 14 relativ zu anderen Baugruppen, also beispielsweise relativ zur zweiten Arbeitsspindel 22, exakt überprüfen, wobei allerdings in diesem Fall die exakte Positionierbarkeit dieser Funktionseinheit mittels der Maschinensteuerung 70 Voraussetzung für die Überprüfung ist.

Alternativ dazu läßt sich aber auch die relative Position des ersten Spindelgehäuses 14 gegenüber einem der Werkzeugträger 52 oder 62 oder einem der Werkzeuge 58 oder 68 überprüfen.

Zur Versorgung aller Wegmeßaufnehmer 72, 74, 92, 94 sowie 116 ist zusätzlich noch eine Konstantspannungsquelle 130 vorgesehen, die jeden der Wegmeßaufnehmer 72, 74, 92, 94, 116 mit einer konstanten Betriebsspannung versorgt.

## Patentansprüche

1. Maschine umfassend ein Maschinengestell und mindestens eine in mindestens einer Ausrichtrichtung definiert zum Maschinengestell positionierte Funktionseinheit, welche über eine Verbindungsstelle lösbar und zum Verhindern einer Bewegung in mindestens einer Ausweichrichtung kraftschlüssig mit dem Maschinengestell verbunden ist,
**dadurch gekennzeichnet, daß** im Bereich der Verbindungsstelle (26, 46) an mindestens zwei in Richtung der Ausrichtrichtung (18, 24) im Abstand voneinander angeordneten Meßorten (O₁₁, O₁₂; O₂₁, O₂₂) mittels eines Wegmeßsensors (72, 74, 92, 94) in der Ausweichrichtung (32, 42) eine Relativposition zwischen der Funktionseinheit (16, 22) und dem Maschinengestell (10) erfaßbar ist und daß dem Wegmeßsensor (72, 74, 92, 94) eine Auswerteeinrichtung (86) und eine Visualisierungseinrichtung (90) zugeordnet sind, mit welchen aktuelle, von dem Wegmeßsensor (72, 74, 92, 94) erfaßte Relativpositionen visualisierbar sind.

2. Maschine nach Anspruch 1, **dadurch gekennzeichnet, daß** die Erfassung aktueller Relativpositionen bei im Betrieb befindlicher Werkzeugmaschine erfolgt.

3. Maschine nach Anspruch 1 oder 2, **dadurch gekennzeichnet, daß** jedem Meßort (O₁₁, O₁₂; O₂₁, O₂₂) ein stationärer Wegmeßsensor (72, 74, 92, 94) zugeordnet ist.

4. Maschine nach einem der voranstehenden Ansprüche, **dadurch gekennzeichnet, daß** der Wegmeßsensor (72, 74, 92, 94) die Relativposition eines Gehäuses (14, 20) der Funktionseinheit (16, 22) erfaßt.

5. Maschine nach Anspruch 4, **dadurch gekennzeichnet, daß** der Wegmeßsensor (72, 74, 92, 94) zur Erfassung der Relativposition an einem Montageabschnitt des Gehäuses (14, 20) der Funktionseinheit (16, 22) angreift.

6. Maschine nach einem der voranstehenden Ansprüche, **dadurch gekennzeichnet, daß** der Wegmeßsensor (72, 74, 92, 94) maschinengestellseitig angeordnet ist und die Relativposition der Funktionseinheit (16, 22) abtastet.

7. Maschine nach einem der voranstehenden Ansprüche, **dadurch gekennzeichnet, daß** der Auswerteeinrichtung (86) ein Speicher (88) zugeordnet ist, mit welchem mindestens eine Referenzposition speicherbar ist.

8. Maschine nach Anspruch 7, **dadurch gekennzeichnet, daß** als Referenzposition die Relativposition bei genauigkeitsoptimierter Ausrichtung der Funktionseinheit (16, 22) speicherbar ist.

9. Maschine nach Anspruch 7 oder 8, **dadurch gekennzeichnet, daß** als Referenzposition die Relativposition bei Inbetriebnahme der Werkzeugmaschine speicherbar ist.

10. Maschine nach einem der voranstehenden Ansprüche, **dadurch gekennzeichnet, daß** mit der Visualisierungseinrichtung (90) eine Differenz zwischen der jeweiligen Relativposition und der Referenzposition anzeigbar ist.

11. Maschine nach einem der voranstehenden Ansprüche, **dadurch gekennzeichnet, daß** ein mobiler Wegmeßsensor (110) vorgesehen ist.

12. Maschine nach Anspruch 11, **dadurch gekennzeichnet, daß** mit dem mobilen Wegmeßsensor (110) eine Relativposition zwischen dem Maschinengestell oder einer auf diesem sitzenden Funktionseinheit (16; 22) einerseits und einer durch eine Maschinensteuerung (70) derWerkzeugmaschine steuerbare Funktionseinheit (22) andererseits erfaßbar ist.

13. Maschine nach Anspruch 11 oder 12, **dadurch gekennzeichnet, daß** mit dem mobilen Wegmeßsensor (110) eine Relativposition zwischen einer ersten Funktionseinheit (16) und einer zweiten Funktionseinheit (22) erfaßbar ist, von denen mindestens eine mittels der Maschinensteuerung (70) relativ zum Maschinengestell (10) definiert positionierbar ist.

14. Verfahren zum Erfassen der exakten Position einer Funktionseinheit einer Maschine, insbesondere einer Werkzeugmaschine, relativ zu deren Maschinengestell, wobei die Funktionseinheit in mindestens einer Ausrichtrichtung definiert zum Maschinengestell positioniert ist und über eine Verbindungsstelle lösbar und zum Verhindern einer Bewegung in mindestens einer Ausweichrichtung kraftschlüssig mit dem Maschinengestell verbunden ist,
**dadurch gekennzeichnet, daß** im Bereich der Verbindungsstelle an mindestens zwei in der Ausrichtrichtung im Abstand voneinander angeordneten Meßorten mittels eines Wegmeßsensors in der Ausweichrichtung eine aktuelle Relativposition zwischen der Funktionseinheit und dem Maschinengestell erfaßt und anschließend visualisiert wird.

15. Verfahren nach Anspruch 14, **dadurch gekennzeichnet, daß** die Relativposition bei in Betrieb befindlicher Maschine erfaßt wird.

16. Verfahren nach Anspruch 15, **dadurch gekennzeichnet, daß** die Relativposition während eines Produktionsdurchlaufs erfaßt wird.

17. Verfahren nasch Anspruch 15 oder 16, **dadurch gekennzeichnet, daß** die Relativposition im Verlauf eines Produktionsablaufs erfaßt wird.

18. Verfahren nach einem der Ansprüche 14 bis 17, **dadurch gekennzeichnet, daß** bei exakt positionierter Funktionseinheit an den Meßorten eine relative Referenzposition erfaßt wird.

19. Verfahren nach einem der Ansprüche 14 bis 18, **dadurch gekennzeichnet, daß** die aktuelle Relativposition mit der Referenzposition vergleichen wird.

20. Verfahren nach einem der Ansprüche 14 bis 19, **dadurch gekennzeichnet, daß** die aktuelle Relativposition nach festgelegten Zeitintervallen ermittelt wird

21. Verfahren nach einem der Ansprüche 14 bis 20, **dadurch gekennzeichnet, daß** die aktuelle Referenzposition nach festgelegten Bearbeitungszyklen ermittelt wird.

22. Verfahren nach einem der Ansprüche 14 bis 21, **dadurch gekennzeichnet, daß** die aktuelle Referenzposition nach einem Kollisionsfall ermittelt wird.

23. Verfahren nach einem der Ansprüche 14 bis 22, **dadurch gekennzeichnet, daß** die Differenz zwischen der Referenzposition und der aktuellen Relativposition ermittelt wird.

24. Verfahren nach einem der Ansprüche 14 bis 23, **dadurch gekennzeichnet, daß** die aktuelle Relativposition im Verlauf einer Justierung der Funktionseinheit ermittelt wird und die Justierung entsprechend dem Vergleich mit dem Referenzwert durchgeführt wird.

## Claims

1. Machine comprising a machine frame and at least one operational unit positioned in a defined manner in relation to the machine frame in at least one direction of alignment, said operational unit being connected to the machine frame via a connection point so as to be releasable and in a force-locking manner to prevent any movement in at least one alternative direction,
**characterized in that** in the area of the connection point (26, 46) a relative position between the operational unit (16, 22) and the machine frame (10) is detectable in the alternative direction (32, 42) by means of a distance measurement sensor (72, 74, 92, 94) at at least two measurement locations (O₁₁, O₁₂; O₂₁, O₂₂) arranged at a distance from one another in the direction of the direction of alignment (18, 24) and that an evaluating device (86) and a visualizing device (90) are associated with the distance measurement sensor (72, 74, 92, 94), actual relative positions detected by the distance measurement sensor (72, 74, 92, 94) being visualizable with said devices.

2. Machine as defined in claim 1, **characterized in that** actual relative positions is detected with a machine tool in operation.

3. Machine as defined in claim 1 or 2, **characterized in that** a stationary distance measurement sensor (72, 74, 92, 94) is associated with each measurement location (O₁₁, O₁₂; O₂₁, O₂₂).

4. Machine as defined in any one of the preceding claims, **characterized in that** the distance measurement sensor (72, 74, 92, 94) detects the relative position of a housing (14, 20) of the operational unit (16, 22).

5. Machine as defined in claim 4, **characterized in that** the distance measurement sensor (72, 74, 92, 94) engages on a mounting section of the housing (14, 20) of the operational unit (16, 22) for detecting the relative position.

6. Machine as defined in any one of the preceding claims, **characterized in that** the distance measurement sensor (72, 74, 92, 94) is arranged on the side of the machine frame and senses the relative position of the operational unit (16, 22).

7. Machine as defined in any one of the preceding claims, **characterized in that** a memory (88) is associated with the evaluating device (86), at least one reference position being storable in said memory.

8. Machine as defined in claim 7, **characterized in that** the relative position with alignment of the operational unit (16, 22) optimized with respect to accuracy is storable as reference position.

9. Machine as defined in claim 7 or 8, **characterized in that** the relative position during start-up of the machine tool is storable as reference position.

10. Machine as defined in any one of the preceding claims, **characterized in that** a difference between the respective relative position and the reference position is adapted to be displayed with the visualizing device (90).

11. Machine as defined in any one of the preceding claims, **characterized in that** a mobile distance measurement sensor (110) is provided.

12. Machine as defined in claim 11, **characterized in that** with the mobile distance measurement sensor (110) a relative position is detectable between the machine frame or an operational unit (16; 22) seated thereon, on the one hand, and an operational unit (22) controllable by a machine control (70) of the machine tool, on the other hand.

13. Machine as defined in claim 11 or 12, **characterized in that** with the mobile distance measurement sensor (110) a relative position is detectable between a first operational unit (16) and a second operational unit (22), at least one of said units being positionable in a defined manner relative to the machine frame (10) by means of the machine control (70).

14. Method for detecting the exact position of an operational unit of a machine, in particular, a machine tool relative to its machine frame, wherein the operational unit is positioned in a defined manner in relation to the machine frame in at least one direction of alignment and is connected to the machine frame via a connection point so as to be releasable and in force-locking manner to prevent any movement in at least one alternative direction,
**characterized in that** in the area of the connection point an actual relative position between the operational unit and the machine frame is detected in the alternative direction by means of a distance measurement sensor at at least two measurement locations arranged at a distance from one another in the direction of alignment and subsequently visualized.

15. Method as defined in claim 14, **characterized in that** the relative position is detected with a machine tool in operation.

16. Method as defined in claim 15, **characterized in that** the relative position is detected during a production pass.

17. Method as defined in claim 15 or 16, **characterized in that** the relative position is detected during the course of a production sequence.

18. Method as defined in any one of claims 14 to 17, **characterized in that** a relative reference position is detected at the measurement locations with an operational unit positioned exactly.

19. Method as defined in any one of claims 14 to 18, **characterized in that** the actual relative position is compared to the reference position.

20. Method as defined in any one of claims 14 to 19, **characterized in that** the actual relative position is ascertained following predetermined time intervals.

21. Method as defined in any one of claims 14 to 20, **characterized in that** the actual reference position is ascertained following predetermined machining cycles.

22. Method as defined in any one of claims 14 to 21, **characterized in that** the actual reference position is ascertained following a collision.

23. Method as defined in any one of claims 14 to 22, **characterized in that** the difference between the reference position and the actual relative position is ascertained.

24. Method as defined in any one of claims 14 to 23, **characterized in that** the actual relative position is ascertained during the course of an adjustment of the operational unit and the adjustment is carried out in accordance with the comparison with the reference value.

## Revendications

1. Machine comprenant un bâti de machine et au moins une unité fonctionnelle positionnée dans au moins une direction d'alignement définie par rapport au bâti de machine, laquelle unité fonctionnelle est reliée par adhérence au bâti de machine de manière amovible et de manière à empêcher un déplacement dans au moins une direction de déport par un point de jonction, **caractérisée en ce que**, dans la zone du point de jonction (26, 46), une position relative entre l'unité fonctionnelle (16, 22) et le bâti de machine (10) peut être détectée en au moins deux points de mesure (O₁₁, O₁₂ ; O₂₁, O₂₂) placés à distance l'un de l'autre dans la direction d'alignement (18, 24) à l'aide d'un capteur de déplacement (72, 74, 92, 94) dans la direction de déport (32, 42), et **en ce qu'**un dispositif d'évaluation (86) et un dispositif de visualisation (90), avec lesquels des positions relatives actuelles détectées par le capteur de déplacement (72, 74, 92, 94) peuvent être visualisées, sont associés au capteur de déplacement (72, 74, 92, 94).

2. Machine selon la revendication 1, **caractérisée en ce que** la détection de positions relatives actuelles se fait pendant le fonctionnement de la machine-outil.

3. Machine selon la revendication 1 ou 2, **caractérisée en ce qu'**un capteur de déplacement stationnaire (72, 74, 92, 94) est associé à chaque point de mesure (O₁₁, O₁₂ ; O_{21,} O₂₂).

4. Machine selon l'une quelconque des revendications précédentes, **caractérisée en ce que** le capteur de déplacement (72, 74, 92, 94) détecte la position relative d'un boîtier (14, 20) de l'unité fonctionnelle (16, 22).

5. Machine selon la revendication 4, **caractérisée en ce que** le capteur de déplacement (72, 74, 92, 94) est appliqué sur une section de montage du boîtier (14, 20) de l'unité fonctionnelle (16, 22) pour la détection de la position relative.

6. Machine selon l'une quelconque des revendications précédentes, **caractérisée en ce que** le capteur de déplacement (72, 74, 92, 94) est monté du côté du bâti de machine et balaie la position relative de l'unité fonctionnelle (16, 22).

7. Machine selon l'une quelconque des revendications précédentes, **caractérisée en ce qu'**une mémoire (88), avec laquelle au moins une position de référence peut être mémorisée, est associée au dispositif d'évaluation (86).

8. Machine selon la revendication 7, **caractérisée en ce que** la position relative avec un alignement de l'unité fonctionnelle (16, 22) optimisé avec précision peut être mémorisée comme position de référence.

9. Machine selon la revendication 7 ou 8, **caractérisée en ce que** la position relative lors de la mise en service de la machine-outil peut être mémorisée comme position de référence.

10. Machine selon l'une quelconque des revendications précédentes, **caractérisée en ce qu'**une différence entre la position relative concernée et la position de référence peut être affichée par le dispositif de visualisation (90).

11. Machine selon l'une quelconque des revendications précédentes, **caractérisée en ce qu'**il est prévu un capteur de déplacement mobile (110).

12. Machine selon la revendication 11, **caractérisée en ce qu'**une position relative entre le bâti de machine ou une unité fonctionnelle (16, 22) posée sur celui-ci, d'une part, et une unité fonctionnelle (22) commandée par un dispositif de commande de machine (70) de la machine-outil, d'autre part, peut être détectée à l'aide du capteur de déplacement mobile (110).

13. Machine selon la revendication 11 ou 12,
**caractérisée en ce qu'**une position relative entre une première unité fonctionnelle (16) et une deuxième unité fonctionnelle (22), dont au moins l'une peut être positionnée de manière définie par rapport au bâti de machine (10) à l'aide du dispositif de commande de machine (70), peut être détectée à l'aide du capteur de déplacement mobile (110).

14. Procédé pour la détection de la position exacte d'une unité fonctionnelle d'une machine, en particulier d'une machine-outil, par rapport au bâti de ladite machine dans lequel l'unité fonctionnelle est positionnée dans au moins une direction d'alignement définie par rapport au bâti de machine et qui est reliée par adhérence au bâti de machine de manière amovible et de manière à empêcher un déplacement dans au moins une direction de déport par un point de jonction, **caractérisé en ce que** dans la zone du point de jonction, une position relative actuelle entre l'unité fonctionnelle et le bâti de machine est détectée puis visualisée en au moins deux points de mesure placés à distance l'un de l'autre dans la direction d'alignement à l'aide d'un capteur de déplacement dans la direction de déport.

15. Procédé selon la revendication 14, **caractérisé en ce que** la position relative est détectée pendant le fonctionnement de la machine.

16. Procédé selon la revendication 15, **caractérisé en ce que** la position relative est détectée pendant un cycle de production.

17. Procédé selon la revendication 15 ou 16, **caractérisé en ce que** la position relative est détectée pendant le déroulement de la production.

18. Procédé selon l'une quelconque des revendications 14 à 17, **caractérisé en ce qu'**une position de référence relative est détectée lorsque l'unité fonctionnelle est positionnée exactement aux points de mesure.

19. Procédé selon l'une quelconque des revendications 14 à 18, **caractérisé en ce que** la position relative actuelle est comparée à la position de référence.

20. Procédé selon l'une quelconque des revendications 14 à 19, **caractérisé en ce que** la position relative actuelle est déterminée en fonction d'intervalles de temps définis.

21. Procédé selon l'une quelconque des revendications 14 à 20, **caractérisé en ce que** la position de référence actuelle est déterminée en fonction de cycles d'usinage définis.

22. Procédé selon l'une quelconque des revendications 14 à 21, **caractérisé en ce que** la position de référence actuelle est déterminée en fonction d'un cas de collision.

23. Procédé selon l'une quelconque des revendications 14 à 22, **caractérisé en ce que** la différence entre la position de référence et la position relative actuelle est déterminée.

24. Procédé selon l'une quelconque des revendications 14 à 23, **caractérisé en ce que** la position relative actuelle est déterminée au cours d'un ajustage de l'unité fonctionnelle et l'ajustage est réalisé en fonction de la comparaison avec la valeur de référence.
